# EUROPÄISCHE PATENTSCHRIFT

(11) **EP 1 424 235 B1**
(45) Veröffentlichungstag und Bekanntmachung des Hinweises auf die Patenterteilung: **20.02.2008**
(21) Anmeldenummer: 03018290.1
(22) Anmeldetag: 12.08.2003
(51) Int. Cl.: B60J 7/08, B60J 7/10, B62D 29/04, B60J 7/11

(54) **Abnehmbares Dach für ein Kraftfahrzeug**
Detachable roof for a vehicle
Toit amovible pour un véhicule

(30) Priorität: 20.11.2002 DE 10254132
(43) Veröffentlichungstag der Anmeldung: 02.06.2004
(73) Patentinhaber: Dr.Ing. h.c. F. Porsche Aktiengesellschaft, 70435 Stuttgart (DE)
(72) Erfinder: Homann, Bodo, 71296 Heimsheim (DE); Scholz, Andre, 75446 Wiernsheim (DE); Pfertner, Kurt, 71254 Ditzingen (DE); Armbruster, Reiner, 75417 Mühlacker (DE)

(56) Entgegenhaltungen:
- EP-A- 1 086 882
- DE-A- 1 804 687
- DE-A- 3 732 581
- GB-A- 2 086 316
- US-A- 5 042 873
- US-A- 5 052 743
- US-A1- 2002 166 235

## Beschreibung

Die Erfindung betrifft ein abnehmbares Dach für ein Kraftfahrzeug, insbesondere einen Personenkraftwagen der Sportwagengattung zwischen einem Windschutzscheibenrahmen und einer Rollbügelvorrichtung.

Es ist ein Dach bekannt, US 4,133,576, das in eine Öffnung einer Aufbaustruktur eingesetzt ist und zwei in einer Mittellängsebene zusammengesetzte Dachhälften besitzt. Entlang der Mittellängsebene erstreckt sich bei einer Ausführungsform ein Dichtkörper, der mit Rahmenprofilen der beiden Dachhälften dichtend zusammenarbeitet.

Die US 2002/0166235 A1 beschreibt ein abnehmbares Hardtop, d.h. ein abnehmbares Cabrioverdeck aus festem Verdeckmaterial, für ein Kraftfahrzeug, wobei sich das Hardtop oberhalb einer Gürtellinie des Kraftfahrzeugs von einem Windschutzscheibenrahmen bis in den Heckbereich des Aufbaus des Kraftfahrzeugs erstreckt. Das hier beschriebene Hardtop weist eine innere und eine äußere Dachschale auf und ist aus faserverstärkten Formteilen aus einem Verbundstoff hergestellt, wobei in der inneren Dachschale ein integraler Überrollbügel ausgebildet ist.

Aus der DE 29 29 915 A1 geht eine Dachanordnung für ein Kraftfahrzeug hervor, die zwei von einem Aufbau lösbare Dachteile aufweist, die in einer Mittellängsebene des Kraftfahrzeugs miteinander verbunden sind und von festen Rahmenteilen des Aufbaus getragen werden. Zwischen den Rahmenteilen und den Dachteilen sind Dichtkörper vorgesehen, die an besagten Rahmenteilen gehalten sind und mit Dichtabschnitten der Dachteile eine Dichtfunktion bewerkstelligen. Jedes Dachteil ist aus glasfaserverstärktem Kunststoff hergestellt und besitzt eine Außenwand und eine erste Innenwand und eine zweite Innenwand, welche Innenwände eine deutlich dickere Wandstärke aufweisen als die Außenwand.

Es ist Aufgabe der Erfindung eine abnehmbares Dach für einen Personenkraftwagen zu schaffen, das bei geringem Gewicht eine hohe Festigkeit aufweist. Dabei sollte das Dach konstruktiv so ausgelegt werden, dass sich zumindest ausreichende Kopffreiheit für die Insassen eines in der Höhe festgelegten Personenkraftwagens ergibt.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die aus hochfestem Kunststoff bestehenden Außenwand und Innenwand, die relativ dünnwandig sind, einen steifen Trägerverbund bilden, wodurch die Dachelemente des Dachs nicht nur den Belastungen bspw. zwischen einem Windschutzscheibenrahmen und einem Rollbügel gut standhalten, sondern auch ein ihre leichte Handhabung - Montage und Demontage - unterstützendes Gewicht aufweisen. Dabei laufen die Außenwand und die Innenwand mit relativ geringem Abstand zueinander, wodurch bei gegebener Fahrzeughöhe eine vertretbar gute Kopffreiheit für die Insassen des Personenkraftwagens erzielbar ist. Schließlich optimieren die Profilierungen der Innenwand zum einen die Festigkeit der Dachelemente und zum anderen sind sie geeignet um Anbauteile - Verschlüsse, Dichtkörper oder dgl. - aufzunehmen.

In der Zeichnung ist ein Ausführungsbeispiel der Erfindung dargestellt, das nachstehend näher erläutert.

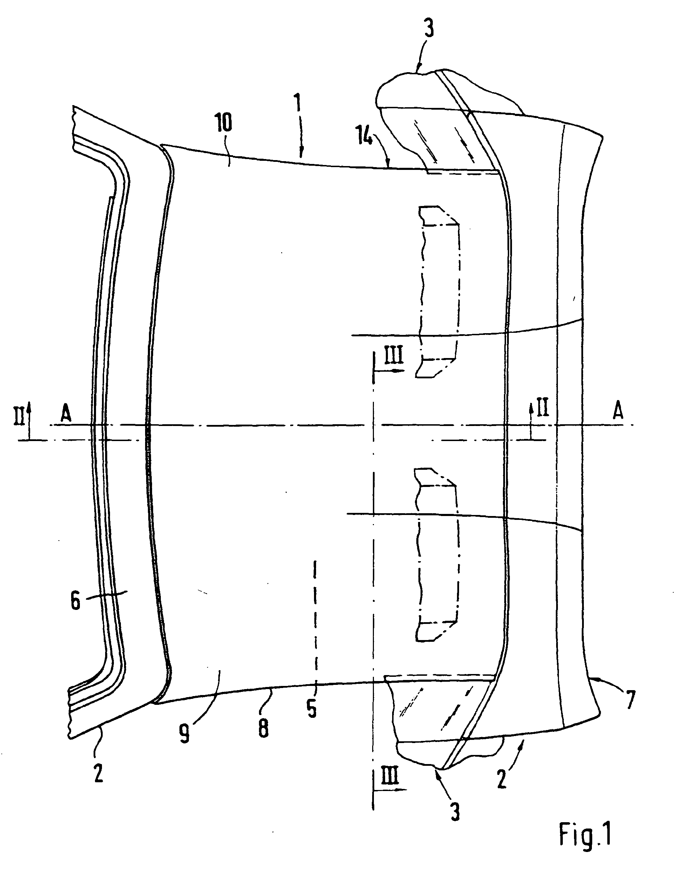

Es zeigen
- Fig. 1: eine Ansicht von oben auf einen Personenkraftwagen,
- Fig. 2: einen Schnitt nach der Linie II-II der Fig. 1,
- Fig. 3.: einen Schnitt nach der Linie III-III.

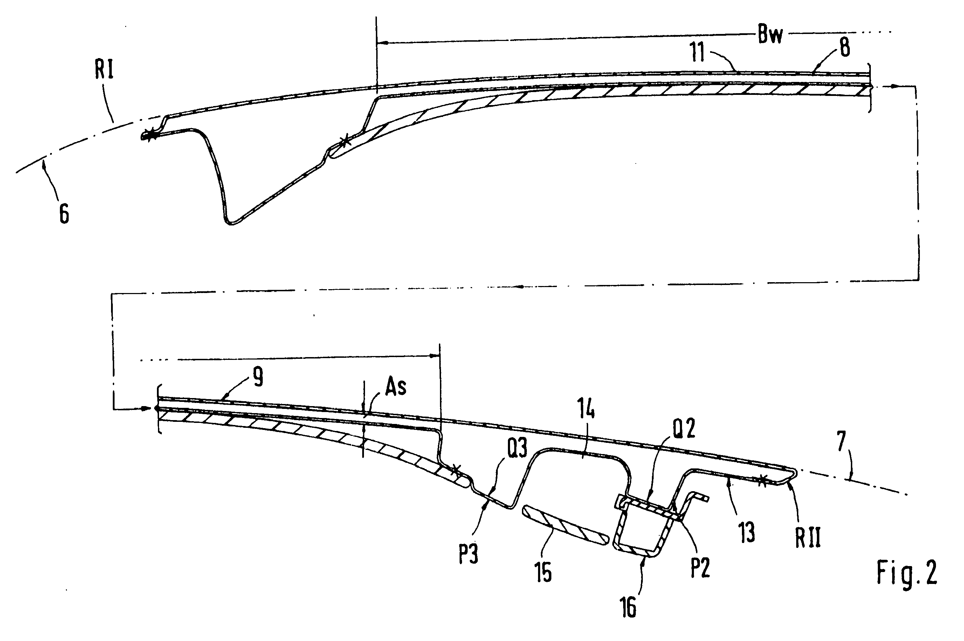

Ein Personenkraftwagen 1 der Sportwagengattung - dynamisch anmutende Stilistik und anspruchsvolle Fahrleistungen - umfasst einen Aufbau 2 mit zwei gegenüberliegenden seitlichen Türen 3, die mit Türscheiben 4 versehen sind. Der Aufbau 2 begrenzt einen Fahrgastraum 5 und weist einen Windschutzscheibenrahmen 6 und eine Rollbügelvorrichtung 7 auf. Der Fahrgastraum 5 wird von einem abnehmbaren Dach 8 überwölbt, das sich am Windschutzscheibenrahmen 6 und an der Rollbügelvorrichtung 7 abstützt. Das vom Personenkraftwagen 1 leicht lösbare und wieder an ihm festsetzbare Dach 8 wird durch zwei in einer Mittellängsebene A-A zusammengesetzte Dachelemente 9 und 10 gebildet, die in vom Aufbau getrennten Zustand bspw. in einem in den Aufbau 2 integrierten Stauraum unterbringbar sind. Jedes Dachelement 9 besitzt eine Außenwand 11 sowie eine Innenwand 12 - Fig. 2 -, die relativ dünnwandig sowie getrennt voneinander hergestellt sind und aus einem hochfesten bspw. kohlefaserverstärktem Kunststoff - CFK - bestehen. Zur Bildung eines steifen Trägeverbunds 13 sind die Außenwand 11 und die Innenwand 12 an Randzonen Rl, Rll, RIII, RIV und RV des Dachelements 9 zusammengeführt und bspw. durch Kleben miteinander verbunden. Um eine möglichst hohe Festigkeit des Trägerverbunds 13 und auch eine gut lackierfähige äußere Oberfläche der Außenwand 11 zu erreichen - keine Druckstellen -, verlaufen die Außenwand 11 und die Innenwand 12 über einen wesentlichen Bereich Bw mit relativ geringem Abstand As zueinander. Durch diese Ausgestaltung kann ferner bei gegebener Fahrzeughöhe die Kopffreiheit für die Insassen vorteilhaft gestaltet werden.

Gemäß Fig. 2 ist in einem Längsschnitt des Personenkraftwagens 1 gesehen zumindest die Innenwand 12 benachbart der vorderen Randzone Rl und der hinteren Randzone RII mit einer ersten Profilierung P1 bzw. einer zweiten Profilierung P2 versehen, und in der Nähe der zweiten Profilierung P2 ist eine dritte Profilierung P3 in die Innenwand 12 eingearbeitet, die dem Windschutzscheiberahmen 6 zugekehrt ist. Die zweite Profilierung P2 und die dritte Profilierung P3, die eine etwa U-förmigen Querschnitt Q2 und Q3 aufweisen, sind in der Weise zueinander angeordnet, dass sich eine Einformung 14 mit U-förmigem Querschnitt ergibt, die zur Aufnahme eines Handhebels 15 eines Dachverschlusses 16 dient. Letzterer wirkt zwischen dem Dach 8 bzw. den Dachelementen 9,10 und der Rollbügelvorrichtung 7. Darüber hinaus ist die zweite Profilierung P2 zur Halterung des Dachverschlusses 16 ausgebildet.

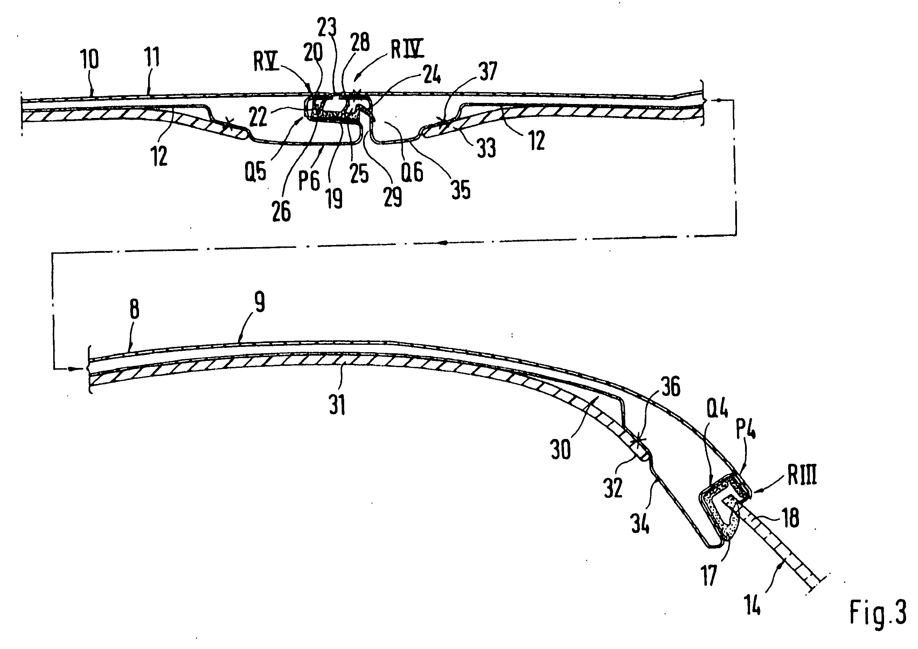

In Fig. 3 ist ein Querschnitt des Personenkraftwagens 1 im Bereich des Dachs 8 dargestellt, aus dem ersichtlich ist, dass das Dachelement 9 an der der seitlichen der Türscheibe 4 der Tür zugekehrten Randzone Rlll eine vierte Profilierung P4 umfasst. Die vierte Profilierung P4 besitzt einen zur Türscheibe 4 hin offenen U-förmigen Querschnitt Q4, der zur Aufnahme eines ersten Dichtkörpers 17 geeignet ist und einen Endbereich der 18 der besagten Türscheibe 4 umgreift. Ebenso ist aus dieser Fig. 3 ersichtlich, dass die Dachelemente 9,10 in den der Mittelängsebene A-A zugekehrten Randzonen RIV und RV eine fünfte Profilierung P5 und eine sechste Profilierung P6 aufweisen. Die sechste Profilierung P6 wird durch einen um 90° gedrehten U-förmigen Querschnitt Q5, der zur fünften Profilierung P5 hin offen ist, wobei der Querschnitt Q5 einen innenliegenden Schenkel 19 und eine außenliegenden Schenkel 20 aufweist. Der innenliegende Schenkel 19 trägt einen zweiten Dichtkörper 21, der mit einer ersten Dichtlippe 22, einem Schlauchkörper 23 und einer zweiten Dichtlippe 24 versehen ist, welche Dichtlippen 22 und 24 den Schlauchkörper 23 an Längsseiten 25 und 26 begrenzen. Die erste Dichtlippe 22 und der Schlauchkörper 23 wirken mit einer Innenseite 27 des außenliegenden Schenkels 20 dichtend zusammen, der nach Art eines Flansches ausgebildet ist. Demgegenüber ist die fünfte Profilierung P5 ein winkelförmiger Querschnitt Q6, der mit einem Flansch 28 die sechste Profilierung P6 bzw. den Querschnitt Q5 zumindest abschnittsweise überragt und mit dem Schlauchkörper 23 dichtend zusammenarbeitet. Dabei liegt die zweite Dichtlippe 24 an einem aufrechten Steg 29 des Querschnitts Q5 an.

Schließlich ist an einer Innenseite 30 der Innenwand 12 eine relativ dünnwandige, jedoch schalldämmende Verkleidungswand 31 - Fig. 3 - angebracht, die aus einem geeigneten Werkstoff bspw. Kunststoff hergestellt ist und mit möglichst geringem Abstand zur besagten Innenwand verläuft 12, damit die Kopffreiheit für die Insassen über einen wesentlichen Bereich des Dachs 8 nicht beeinträchtigt wird. Hierzu verlaufen Endbereiche 32 und 33 der Verkleidungswand 31 des Dachelements 9 bündig zu Wandabschnitten 34 und 35 der Profilierungen P4 und P5, wobei die Endbereiche 32 und 33 mittels Kleben mit korrespondierenden Aufnahmeabschnitten 36 und 37 der Innenwand 12 verbunden sind.

## Patentansprüche

1. Abnehmbares Dach (8) für ein Kraftfahrzeug, insbesondere für einen Personenkraftwagen, das sich zwischen einem Windschutzscheibenrahmen (6) und einer Rollbügelvorrichtung(7) eines Aufbaus (2) erstreckt und an besagten Aufbauteilen (6, 7) lösbar befestigt ist, wobei das abnehmbare Dach (8) eine Außenwand (11) sowie eine Innenwand(12) umfasst, **dadurch gekennzeichnet, dass** die Außenwand (11) und die Innenwand (12) des Dachs (8) relativ dünnwandig sind und aus hochfestem Kunststoff, beispielsweise kohlefaserverstärktem Kunststoff hergestellt sind und einen steifen Trägerverbund (13) bilden, wobei die Außenwand (11) und die Innenwand (12) im Wesentlichen nur an äußeren Randzonen (RI, RII, RIII, RIV und RV) des Dachs (8) zusammengeführt sind und über einen wesentlichen Bereich (Bw) mit relativ geringem Abstand (As) zueinander verlaufen, und dass im Längsschnitt des Dachs (8) gesehen zumindest die Innenwand (12) benachbart von einer vorderen Randzone (RI) und benachbart einer hinteren Randzone (RII) mit einer ersten Profilierung (P1) bzw. einer zweiten Profilierung (P2) versehen ist.

2. Abnehmbares Dach nach Anspruch 1, **dadurch gekennzeichnet, dass** die Außenwand (11) und die Innenwand (12) getrennt voneinander hergestellt und nur an den Randzonen (RI, RII, RIII, RIV und RV) beispielsweise durch Kleben miteinander verbunden sind.

3. Abnehmbares Dach nach Anspruch 1 oder 2, **dadurch gekennzeichnet, dass** benachbart zur zweiten Profilierung (P2) eine dritte Profilierung (P3) vorgesehen ist, wobei zwischen zweiter Profilierung (P2) und dritter Profilierung (P3) eine Einformung (14) zur Aufnahme eines Handhebels (15) eines Dachverschlusses (16) vorgesehen ist.

4. Abnehmbares Dach nach Anspruch 3, **dadurch gekennzeichnet, dass** die zweite Profilierung (P2) zur Halterung des Dachverschlusses (16) ausgebildet ist.

5. Abnehmbares Dach nach einem oder mehreren der vorangehenden Ansprüche, **dadurch gekennzeichnet, dass** zumindest die zweite Profilierung (P2) und die dritte Profilierung (P3) in etwa einen U-förmigen Querschnitt (Q2 und Q3) aufweisen.

6. Abnehmbares Dach nach einem oder mehreren der vorangehenden Ansprüche, **dadurch gekennzeichnet, dass** in einem Querschnitt des Dachs (8) gesehen an seitlichen an Türscheiben (4) von Türen (3) eines Aufbaus (2) angrenzende Randzonen (RIII) vierte Profilierungen (P4) vorgesehen sind.

7. Abnehmbares Dach nach Anspruch 6, **dadurch gekennzeichnet, dass** jede vierte Profilierung(P4) einen zu einer der Türscheiben (4) hin offenen U-förmigen Querschnitt (Q4) besitzt, der zur Aufnahme eines Dichtkörpers (17) für die Türscheibe (4) ausgebildet ist.

8. Abnehmbares Dach nach den Ansprüchen 6 und 7, **dadurch gekennzeichnet, dass** der U-förmige Querschnitt (Q4) der vierten Profilierung (P4) einen Endbereich (18) der Türscheibe (4) umgreift.

9. Abnehmbares Dach nach einem oder mehreren der vorangehenden Ansprüche, **dadurch gekennzeichnet**, das das Dach (8) zwei in einer Mittellängsebene des Personenkraftwagens zusammengesetzte Dachelemente (9, 10) aufweist, wobei die Dachelemente (9, 10) an den der Mittellängsebene (A) zugekehrten Randzonen (RIV, RV) eine fünfte Profilierung (P5) und eine sechste Profilierung (P6) aufweisen.

10. Abnehmbares Dach nach Anspruch 9, **dadurch gekennzeichnet, dass** die sechste Profilierung (P6) einen um 90° gedrehten U-förmigen zur fünften Profilierung (P5) hin offene Querschnitt (Q5) aufweist, wovon ein innenliegender Schenkel (19) eine zweiten Dichtkörper (21) trägt.

11. Abnehmbares Dach nach Anspruch 10, **dadurch gekennzeichnet, dass** der zweite Dichtkörper (21) eine erste Dichtlippe (22), einen Schlauchkörper (23) und eine zweite Dichtlippe (24) umfasst, welche Dichtlippen (22 und 24) den Schlauchkörper (23) an Längsseiten (25 und 26) begrenzen.

12. Abnehmbares Dach nach den Ansprüchen 10 und 11, **dadurch gekennzeichnet, dass** die erste Dichtlippe (22) und der Schlauchkörper (23) mit einem außenliegenden Schenkel (20) des Querschnitts (Q5) dichtend zusammenwirken.

13. Abnehmbares Dach nach einem der Ansprüche 9-12, dass die fünfte Profilierung (P5) zumindest einen winkelförmigen Querschnitt (Q6) umfasst, der mit einem Flansch (28) die sechste Profilierung (P6) überragt und mit dem Schlauchkörper (23) dichtend zusammenarbeitet, wobei die dritte Dichtlippe (24) an einem aufrechten Steg (29) des Querschnitts (Q6) dichtend anliegt.

14. Abnehmbares Dach nach einem oder mehreren der vorangehenden Ansprüche, **dadurch gekennzeichnet, dass** an der Innenseite (30) der Innenwand (12) eine Verkleidungswand (31) bspw. aus schalldämmendem Werkstoff vorgesehen ist.

15. Abnehmbares Dach nach Anspruch 14, **dadurch gekennzeichnet, dass** die Verkleidungswand (31) bündig zu Wandabschnitten (34,35) der Profilierungen (P4 und P5) ausgeführt ist.

## Claims

1. Detachable roof (8) for a motor vehicle, in particular for a passenger vehicle, which extends between a windscreen frame (6) and a roll bar device (7) of a vehicle body (2) and is fastened releasably to said body parts (6, 7), the detachable roof (8) comprising an outer wall (11) and an inner wall (12), **characterized in that** the outer wall (11) and the inner wall (12) of the roof (8) are relatively thin-walled and are produced from high-strength plastic, for example carbon-fibre-reinforced plastic, and form a stiff support structure (13), the outer wall (11) and the inner wall (12) being brought together essentially only at outer edge zones (RI, RII, RIII, RIV and RV) of the roof (8) and running over a substantial region (Bw) at a relatively small distance (As) from each other, and **in that**, as seen in the longitudinal section of the roof (8), at least the inner wall (12) is provided with a first profiling (P1) and with a second profiling (P2) respectively adjacent to a front edge zone (RI) and adjacent to a rear edge zone (RII).

2. Detachable roof according to Claim 1, **characterized in that** the outer wall (11) and the inner wall (12) are produced separately from each other and are connected to each other, for example by adhesive bonding, only at the edge zones (RI, RII, RIII, RIV and RV).

3. Detachable roof according to Claim 1 or 2, **characterized in that** a third profiling (P3) is provided adjacent to the second profiling (P2), with a moulding (14) for receiving a hand lever (15) of a roof closure (16) being provided between second profiling (P2) and third profiling (P3).

4. Detachable roof according to Claim 3, **characterized in that** the second profiling (P2) is designed for securing the roof closure (16).

5. Detachable roof according to one or more of the preceding claims, **characterized in that** at least the second profiling (P2) and the third profiling (P3) have approximately a U-shaped cross section (Q2 and Q3).

6. Detachable roof according to one or more of the preceding claims, **characterized in that** fourth profilings (P4) are provided, as seen in a cross section of the roof (8), on lateral edge zones (RIII) adjacent to door windows (4) of doors (3) of a vehicle body (2).

7. Detachable roof according to Claim 6, **characterized in that** every fourth profiling (P4) has a U-shaped cross section (Q4) which is open towards one of the door windows (4) and is designed for receiving a sealing body (17) for the door window (4).

8. Detachable roof according to Claims 6 and 7, **characterized in that** the U-shaped cross section (Q4) of the fourth profiling (P4) engages around an end region (18) of the door window (4).

9. Detachable roof according to one or more of the preceding claims, **characterized in that** the roof (8) has two roof elements (9, 10) which are assembled in a centre longitudinal plane of the passenger vehicle, the roof elements (9, 10) having a fifth profiling (P5) and a sixth profiling (P6) on the edge zones (RIV, RV) which face the centre longitudinal plane (A).

10. Detachable roof according to Claim 9, **characterized in that** the sixth profiling (P6) has a cross section (Q5) which is rotated through 90°, is U-shaped and is open towards the fifth profiling (P5) and of which an inner limb (19) bears a second sealing body (21).

11. Detachable roof according to Claim 10, **characterized in that** the second sealing body (21) comprises a first sealing lip (22), a tubular body (23) and a second sealing lip (24), which sealing lips (22 and 24) delimit the tubular body (23) on longitudinal sides (25 and 26).

12. Detachable roof according to Claims 10 and 11, **characterized in that** the first sealing lip (22) and the tubular body (23) interact in a sealing manner with an outer limb (20) of the cross section (Q5).

13. Detachable roof according to one of Claims 9-12, **characterized in that** the fifth profiling (P5) comprises at least one angular cross section (Q6) which protrudes over the sixth profiling (P6) by means of a flange (28) and cooperates with the tubular body (23) in a sealing manner, the third sealing lip (24) bearing in a sealing manner against an upright web (29) of the cross section (Q6).

14. Detachable roof according to one or more of the preceding claims, **characterized in that** a covering wall (31), for example made of soundproofing material, is provided on the inside (30) of the inner wall (12).

15. Detachable roof according to Claim 14, **characterized in that** the covering wall (31) is designed to be flush with wall sections (34), 35) of the profilings (P4 and P5).

## Revendications

1. Toit amovible (8) pour un véhicule automobile, en particulier pour un véhicule léger, qui s'étend entre un cadre de pare-brise (6) et un dispositif d'arceau de sécurité (7) d'une caisse (2) et qui est fixé de manière amovible auxdits composants de la caisse (6, 7), le toit amovible (8) présentant une paroi extérieure (11) ainsi qu'une paroi intérieure (12), **caractérisé en ce que** la paroi extérieure (11) et la paroi intérieure (12) du toit (8) ont des parois relativement minces et sont fabriquées en plastique de grande résistance, par exemple du plastique renforcé par des fibres de carbone, et forment un composite de support rigide (13), la paroi extérieure (11) et la paroi intérieure (12) étant réunies essentiellement uniquement au niveau de zones de bord extérieures (RI, RII, RIII, RIV, et RV) du toit (8), et s'étendant sur une plage considérable (Bw) avec un intervalle relativement petit (As) entre elles, et **en ce que**, vu en coupe longitudinale du toit (8), au moins la paroi intérieure (12) est pourvue, à proximité d'une zone de bord avant (RI) et à proximité d'une zone de bord arrière (RII), d'un premier profilage (P1), respectivement d'un deuxième profilage (P2).

2. Toit amovible selon la revendication 1, **caractérisé en ce que** la paroi extérieure (11) et la paroi intérieure (12) sont fabriquées séparément l'une de l'autre et ne sont connectées l'une à l'autre qu'aux zones de bord (RI, RII, RIII, RIV et RV), par exemple par collage.

3. Toit amovible selon la revendication 1 ou 2, **caractérisé en ce qu'**un troisième profilage (P3) est prévu à proximité du deuxième profilage (P2), un moulage (14) étant prévu entre le deuxième profilage (P2) et le troisième profilage (P3), pour recevoir un levier à main (15) d'une fermeture du toit (16).

4. Toit amovible selon la revendication 3, **caractérisé en ce que** le deuxième profilage (P2) est réalisé pour retenir la fermeture du toit (16).

5. Toit amovible selon l'une quelconque ou plusieurs des revendications précédentes, **caractérisé en ce qu'**au moins le deuxième profilage (P2) et le troisième profilage (P3) présentent approximativement une section transversale en forme de U (Q2 et Q3).

6. Toit amovible selon l'une quelconque ou plusieurs des revendications précédentes, **caractérisé en ce que**, vu en section transversale du toit (8), des quatrièmes profilages (P4) sont prévus sur des zones de bord latérales (RIII) adjacentes à des panneaux de porte (4) de portes (3) d'une caisse (2).

7. Toit amovible selon la revendication 6, **caractérisé en ce que** chaque quatrième profilage (P4) possède une section transversale en forme de U (Q4) ouverte vers l'un des panneaux de porte (4), qui est réalisée pour recevoir un corps d'étanchéité (17) pour le panneau de porte (4).

8. Toit amovible selon les revendications 6 et 7, **caractérisé en ce que** la section transversale en forme de U (Q4) du quatrième profilage (P4) vient en prise autour d'une région d'extrémité (18) du panneau de porte (4).

9. Toit amovible selon l'une quelconque ou plusieurs des revendications précédentes, **caractérisé en ce que** le toit (8) présente deux éléments de toit (9, 10) assemblés dans un plan longitudinal médian du véhicule léger, les éléments de toit (9, 10) présentant au niveau des zones de bord (RIV, RV) tournées vers le plan médian longitudinal (A) un cinquième profilage (P5) et un sixième profilage (P6).

10. Toit amovible selon la revendication 9, **caractérisé en ce que** le sixième profilage (P6) présente une section transversale (Q5) en forme de U tournée de 90° ouverte vers le cinquième profilage (P5), dont une branche intérieure (19) porte un deuxième corps d'étanchéité (21).

11. Toit amovible selon la revendication 10, **caractérisé en ce que** le deuxième corps d'étanchéité (21) comprend une première lèvre d'étanchéité (22), un corps de tuyau (23) et une deuxième lèvre d'étanchéité (24), les lèvres d'étanchéité (22 et 24) limitant le corps de tuyau (23) au niveau des côtés longitudinaux (25 et 26).

12. Toit amovible selon les revendications 10 et 11, **caractérisé en ce que** la première lèvre d'étanchéité (22) et le corps de tuyau (23) coopèrent hermétiquement avec une branche extérieure (20) de la section transversale (Q5).

13. Toit amovible selon l'une quelconque ou plusieurs des revendications 9 à 12, **caractérisé en ce que** le cinquième profilage (P5) comprend au moins une section transversale coudée (Q6) qui dépasse avec une bride (28) au-delà du sixième profilage (P6) et qui coopère hermétiquement avec le corps de tuyau (23), la troisième lèvre d'étanchéité (24) s'appliquant hermétiquement contre une aile dressée (29) de la section transversale (Q6).

14. Toit amovible selon l'une quelconque ou plusieurs des revendications précédentes, **caractérisé en ce qu'**une paroi d'habillage (31), par exemple en matériau insonorisant, est prévue sur le côté intérieur (30) de la paroi intérieure (12).

15. Toit amovible selon la revendication 14, **caractérisé en ce que** la paroi d'habillage (31) est réalisée en affleurement avec des portions de paroi (34, 35) des profilages (P4 et P5).
